# EUROPEAN PATENT SPECIFICATION

(11) **EP 1 337 164 B1**
(45) Date of publication and mention of the grant of the patent: **26.10.2005**
(21) Application number: 01997232.2
(22) Date of filing: 26.11.2001
(51) Int. Cl.: A23P 1/08, B01F 13/10

(54) **FLAVOURING SYSTEM**
VORRICHTUNG ZUM AROMATISIEREN
SYSTEME D'AROMATISATION

(30) Priority: 27.11.2000 JP 2000360063; 06.12.2000 JP 2000370991; 08.05.2001 JP 2001137010
(43) Date of publication of application: 27.08.2003
(73) Proprietor: ISHIDA CO., Ltd., Kyoto-shi, Kyoto 606-8392 (JP)
(72) Inventor: Yakusigawa, Yasusi, Siga 520-3231 (JP); Sunter, Adrian Meredith, Malvern, Worcestershire WR14 2UU (GB)
(74) Representative: Skone James, Robert Edmund
(86) International application number: PCT/GB2001/005204
(87) International publication number: WO 2002/041715

(56) References cited:
- EP-A- 1 147 714
- GB-A- 2 337 191
- IE-A- 940 755
- US-A- 3 803 870
- US-A- 5 728 216
- US-A1- 2001 008 646

## Description

This invention relates to a flavouring system, particularly for use in snack food production in which a flavouring such as salt or a spice is applied onto potato chips or the like after they are taken out of a frying machine.

Apparatus for adding flavouring to snack food items such as potato- or corn-based items have been described, for example, in Japanese Patent Publications Tokko 4-35132 and 2689139 and US Patents 5,090,593 and 5,846,324. In these prior art, items such as potato chips taken out of a frying machine are introduced into a rotary drum and a seasoning material is added at a specified ratio to mix them together. Whenever a different kind of flavouring material is to be used, it is necessary to wash all components downstream of the flavouring apparatus. This typically includes a weighing machine for dividing received items into batches of a specified weight to be made into individual packaged products.

It now goes without saying that washing all these devices on the downstream side is both cumbersome and time-consuming. Moreover, since all these devices must be stopped during such a washing operation, it has a significantly adverse effect on the productivity of the system.

When devices on a production line are to be washed, the one on the upstream side is stopped first but those on the downstream side are allowed to continue operating until the products being processed thereby are all discharged. Since the operator cannot exactly control the number of finally outputted products before the system is completely stopped, there may be left a container which is only incompletely filled with finished products.

In view of such problems with prior art systems, it may be proposed to provide as many flavouring systems as there are different kinds of flavouring materials to be used, each system being used for applying only one kind of flavouring material. This, however, will affect the equipment cost adversely. Moreover, one cannot do away with the washing if the consumers' taste changes and a new kind of seasoning must be introduced.

Another problem with prior art flavouring apparatus is that food items of different sizes remain inside the apparatus for different periods of time. As a result, the rate of application on individual food items cannot be made uniform even if the quantity of added flavouring material is adjusted according to the flow rate of the items.

Still another problem is that a material such as stainless steel must be used for devices on the downstream side because flavouring materials often contain salt. Since the parts that come into contact with food items must be easily detachable, the device becomes accordingly more complicated and expensive to produce.

An apparatus is known for packaging quantities of a frozen product in which a sauce is supplied into the same packaging following portioning of the product. However, this is not suitable for handling flavouring for snack food items.

GB2337191 discloses a coating apparatus for coating batches of a product with for example a flavouring composition. The coating material is fed at a constant rate which may be varied depending on the rate of production of the batches. The apparatus preferably injects the charges of coating material onto the batches of product using an injector comprising a fluid pressure device that provides a gas stream to entrain particles of the coating material.

EP1147714 discloses a method of processing and packaging food items. The food items are divided into measured batches and a predetermined dose of flavouring composition is applied in particulate form to each batch. Each batch is then packaged. The flavoured composition is dispensed by a screw feeder.

In accordance with the present invention, a flavouring system comprises:
a portioning device for receiving items and sequentially supplying batches of a specified quantity of said items; a flavouring dispenser for dispensing measured quantities of flavouring; an applying device downstream of the portioning device for individually applying said measured quantities of flavouring to said batches of items; a packaging device downstream of the applying device for packaging in a bag said batch of items; a sensor for monitoring discharge of flavouring by the applying device and/or dispenser; and a sorting device responsive to an output from the sensor indicating an abnormality in said discharge of said flavouring to discard a packaged product packaged by said packaging device.

In this specification, by "quantity" we include number, weight, volume or any other measure suitable for the items concerned.

In contrast to the prior art, we incorporate an applying device downstream of the portioning device so that flavouring is applied to the items, rather than during a subsequent cooking step.

In addition, the system overcomes the washing problems mentioned above. Thus, since the flavouring is applied after the items are portioned into batches of a specified quantity by means of a weighing machine or the like, the flavouring material being applied does not come into contact with the weighing device and it becomes unnecessary to wash the weighing machine each time a new flavouring material is to be applied. Thus, the system need not be stopped for a washing operation and hence the productivity improves dramatically. Since the flavouring operations are carried out for each of the batches, the flavouring can be supplied according to the content of each batch and hence the quality of taste can be made uniform among the products. Moreover, since the weighing device need not be washed, it need not be detachably structured. Thus, such a system can be provided more inexpensively.

The invention allows differently flavoured products to be produced according to a preliminarily planned schedule and a change in the kind of flavouring material to be applied can be effected quickly, or even automatically.

An important aspect of the invention is that the items can be coated, preferably uniformly, with the flavouring.

The invention enables the flavouring to be changed instantly such that differently flavoured products can be produced on a single production line.

This invention provides a flavouring system which is inexpensive and durable.

Flavourings typically include seasoning such as salt or spices but may also include other particulate, powder or liquid additives typically that require to be applied reasonably uniformly. Flavourings also include "chemical" flavours commonly defined by "E numbers" such as cheese and onion flavours. The items are typically snack food products such as potato chips but could include other foodstuffs such as cereals, nuts, biscuits, confectionery etc.

The items will typically be unseasoned prior to portioning but could already by partly seasoned.

The portioning device is typically a weigher but could also portion by number, volume or even type of item.

Some examples of systems and methods according to the present invention will now be described with reference to the accompanying drawings, in which:-
Figure 1 is a schematic block diagram showing the basic structure of a seasoning applying system embodying this invention;
Figure 2 is a schematic block diagram for showing the basic structure of a flavouring device such as shown in Figure 1;
Figure 3 is a schematic diagonal view of a mixing device such as shown in Figures 1 and 2;
Figure 4A is a plan view of a mixing device and Figure 4B is a side view of a portion of a mechanism for rotating the drum;
Figures 5A, 5B and 5C are schematic sectional views for showing how food items and a flavouring are mixed together;
Figure 6 shows how data may be stored in a memory;
Figure 7 is a schematic block diagram of another flavouring device;
Figure 8 is a sectional view taken along line 8-8 in Figure 7;
Figure 9 is a partially sectional view of the flavouring dispenser; and,
Figure 10 is a block diagram of a control system.

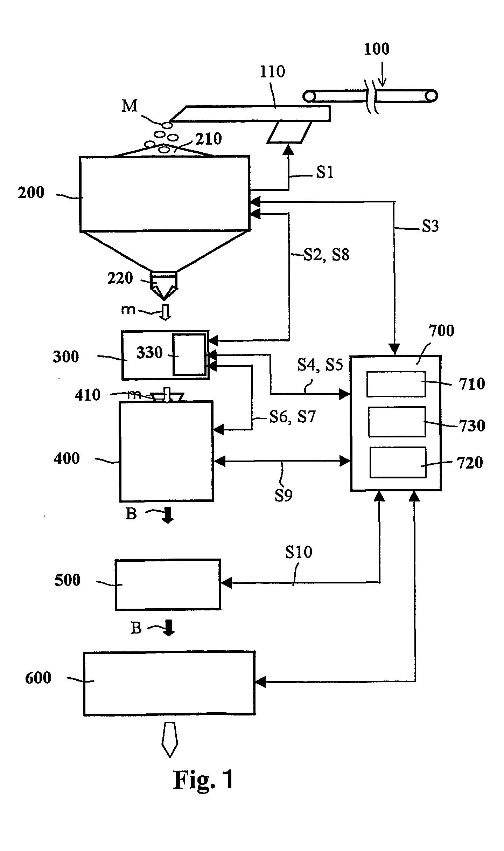

The invention is described next by way of an example. Figure 1 shows the basic structure of a flavouring system embodying this invention including a transporting device 100 for transporting unseasoned or unflavoured food items, a weighing device 200 for portioning or partioning the food items transported by the transporting device 100 into batches of a specified quantity for filling one bag, a flavouring device 300 for applying a flavouring to each batch of the food items, a packaging device 400 for packaging the flavoured or seasoned food items, a sorting device 500 for eliminating from the production line defective products caused by an error in weighing or application of flavouring, a packing device 600 for packing packaged products in a box, and a control unit 700 for not only controlling each of the devices 100, 200, 300, 400, 500 and 600 but also coordinating their operations.

The transporting device 100 is for receiving food items from a frying machine (not shown) and transporting them to the weighing device 200. A vibrating feeder 110 is provided at its downstream end for supporting thereon the transported food items. When a supply-requesting signal S1 is received from the weighing device 200, the vibrating feeder 110 vibrates for a specified length of time to deliver the food items thereon to the weighing device 200.

The weighing device 200 is for receiving the food items delivered by the vibrating feeder 110 and producing batches of the food items each for filling one bag as a finished product. It has a dispersion feeder 210 at the top, and when the amount of the food items thereon becomes too small, it transmits the aforementioned supply-requesting signal S1 to the vibration feeder 110.

When a discharge-requesting signal S2 is received from the device 300, the weighing device 200 opens its timing hopper 220 to discharge the food items m of a specified amount which have been held therein. Thereafter, the weighing device 200 starts its weighing operations to portion another batch with a specified quantity or weight and discharges this new batch into the timing hopper 220 which has just been emptied and is waiting for the next discharge-requesting signal S2.

The purpose of this weighing device 200 is to portion the food items and to discharge these batches. The portioning need not be in terms of weight but may be in terms of volume. In the case of a snack food of the type having individually different sizes, it is convenient to use a combinational weigher such as described in US-A-5,757,866 adapted to use a dispersion feeder 210 to distribute food items supplied at the top centre among a plurality of weigh hoppers, to measure the individual weights of the items in these weigh hoppers, and to select a combination of the weigh hoppers such that the total of the weights of the items in the selected combination of the weigh hoppers will be of a specified magnitude. With a weigher of this type, even irregularly shaped items can be portioned accurately.

If an error is committed in the weighing, the weighing device 200 transmits an error signal S3 to the control unit 700. Upon receiving an error signal S3, the control unit 700 transmits a stop signal S4 to the device 300 to stop its operation. Thus, if a batch with an incorrect quantity is discharged, this batch is not flavoured and may be collected to be used for producing a differently flavoured product or be recycled for use with the same flavour.

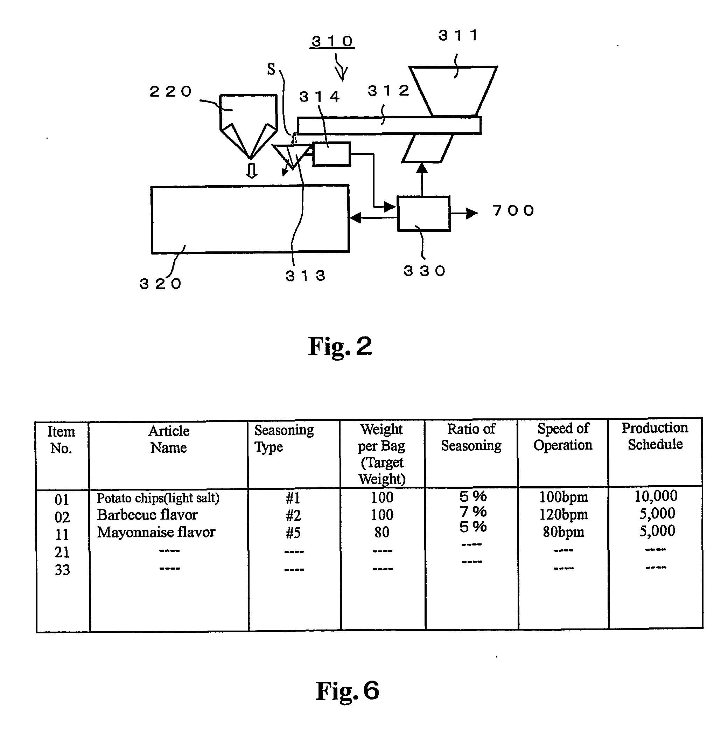

As shown in Figure 2, the device 300 includes a supplying device or dispenser 310 for discharging a flavouring, a mixing device 320, constituting an applying device, for mixing the discharged flavouring and the batch of food items m discharged from the timing hopper 220, and a control device 330 for controlling the supplying device 310 and the mixing device 320.

The supplying device 310 includes a charge hopper 311 for storing the flavouring, a vibratory feeder 312 for transporting the flavouring inside the charge hopper 311 to its front end little by little, a weigh hopper 313 for receiving the flavouring S from the vibratory feeder 312 and weighing the received flavouring and a weight sensor 314 for measuring the weight of the weigh hopper 313.

The control device 330 drives the feeder 312 while monitoring the value measured by the weight sensor 314. When a specified quantity of the flavouring has been received by the weigh hopper 313, the feeder 312 is stopped. If the flow rate of the flavouring from the charge hopper 311 or the amount of the flavouring therein is insufficient and the specified quantity of the flavouring material fails to be received by the weigh hopper 313 within a specified length of time, the control device 330 concludes that an abnormal condition has occurred and outputs a discharge abnormality signal S5 to the control unit 700. Upon receiving the discharge abnormality signal S5, the control unit 700 outputs signals S9 and S10 to the packaging device 400 and the sorting device 500 to eliminate defective products which have not been flavoured properly.

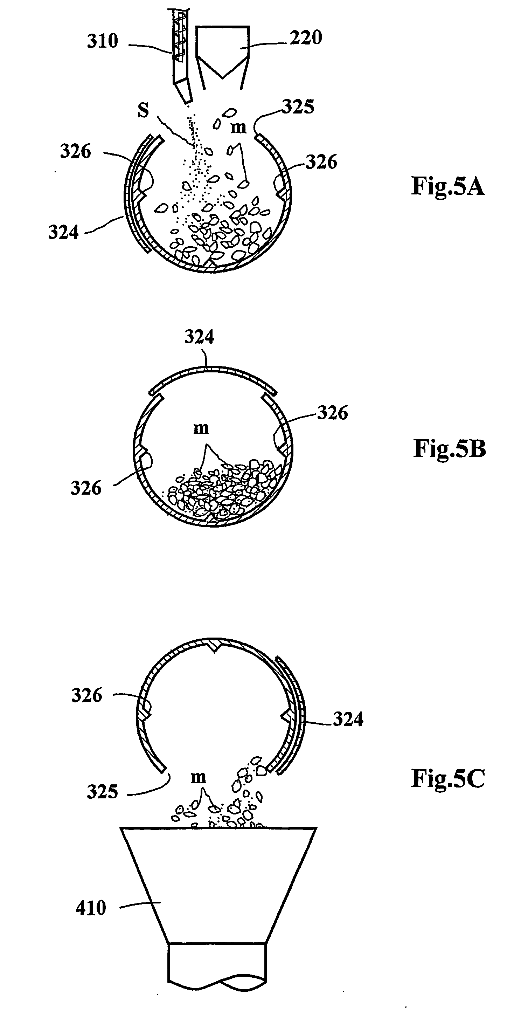

The structure of the supply device 310 depends on the form of the flavouring. If the flavouring is in a liquid form, an air spray device may be appropriate. If the flavouring is in the form of a paste, a screw conveyor capable of controlling the supply according to its angle of rotation may be used. If the flavouring is in a granular or powder form, a device capable of controlling the supply according to the volume may be preferred. In other words, although a screw conveyor is schematically shown in Figure 5A, this is not intended to limit the scope of this invention.

Although Figure 2 shows an embodiment whereby an abnormality in the supply rate of the flavouring is detected by the weight measured by the weigh hopper 313, neither is this intended to limit the scope of the invention. The method of detecting an abnormal situation varies, depending on the mechanism for supplying the flavouring. If the flavouring is a liquid, for example, an abnormal condition may be detected by means of a flow rate sensor. Whatever the form of flavouring, an abnormal supply condition may be detected by means of a weight sensor to monitor the rate of its decrease. In summary, a system according to this invention is capable of dependably preventing improperly flavoured products from being shipped.

The mixing device 320 is for mixing and applying the flavouring on only one batch at a time of the flavouring. Thus, it may be much smaller than the conventional mixers such as disclosed in US patents 5,090,593 and 5,846,324.

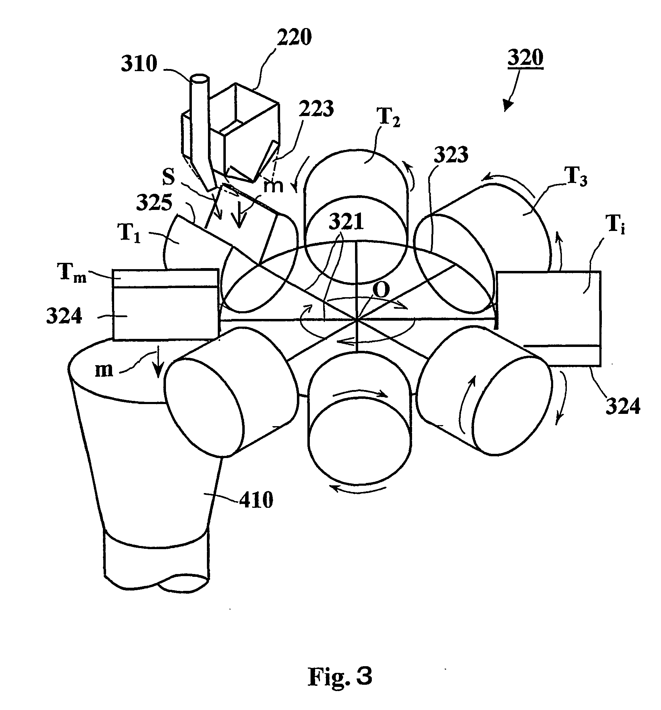

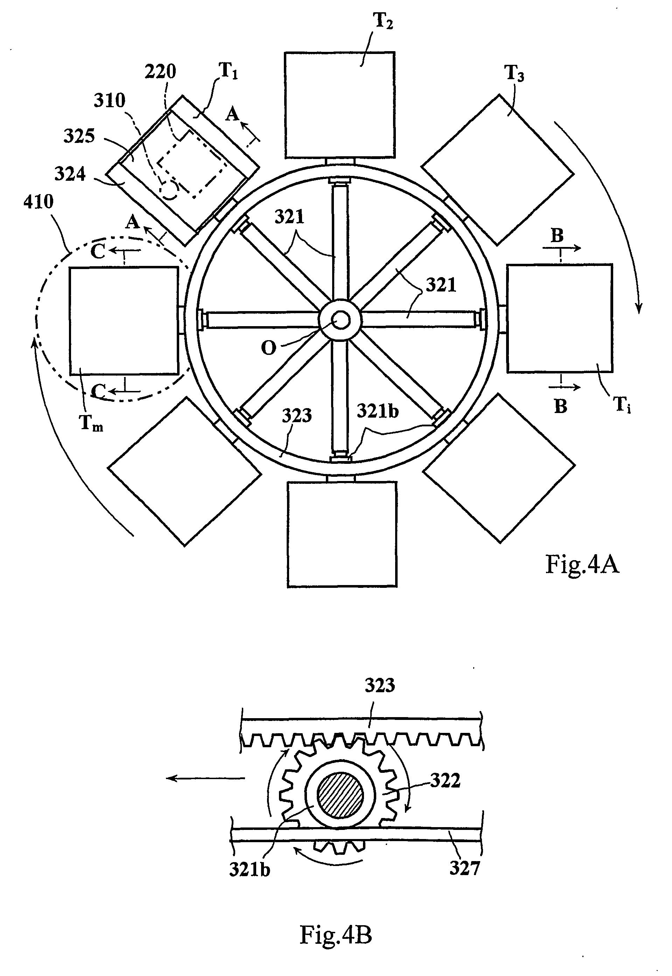

Figure 3 shows an example of the mixing device 320, structured such that a plurality of small drums T₁-Tₘ will rotate around a vertical axis of rotation O while each of them rotates around itself. Explained more in detail with reference to Figure 4A, the drums T₁-Tₘ are attached to the tips of arms 321 extending radially from the axis of rotation O such that as the central rotary shaft along the axis of rotation is rotated, the drums T₁-Tₘ rotate horizontally together with the arms 321, as indicated by arcuate arrows. Each arm 321carries on its end distal from the axis of rotation O a rotary member 321b adapted to rotate around its direction of extension. As shown in Figure 4B, the rotary member 321b is connected to a fixed annular rack 323 and a pinion 322 such that, as the arms 321 rotate horizontally around the axis of rotation O, the pinion 322 engaging with the fixed rack 323 rotates along the rack 323. As a result, the rotary member 321b which is integrally formed with the pinion 322, as well as the associated one of the drums T₁-Tₘ, will rotate around the axis of rotation of the arm 321.

Each of the drums T₁-Tₘ has an opening 325, provided with a sliding gate 324 biased by a spring (not shown) in the direction of closing it. When one of the drums T₁-Tₘ reaches the receiving position for receiving unseasoned food items (the position of drum T₁ in Figure 3), its opening 325 is at an upwardly facing position, as shown in Figure 5A, and the sliding gate 324 is opened. At the same time, another of the drums (Tₘ in the example of Figure 3) which is at the discharge position has its sliding gate 324 opened with its opening 325 facing in the vertically downward direction, as shown in Figure 5C. At other positions, the drums T₁-Tₘ have their sliding gates 324 closed, as shown in Figure 5B, sealing inside both a batch of food items m and a flavouring S.

As shown in Figure 5, there are protrusions 326 inside the drums T₁-Tₘ serving to stir and mix the food items and the flavouring S together as the drums T₁-Tₘ rotate. This results in the food items being uniformly coated with the flavouring. Numeral 223 in Figure 3 indicates the gate of the timing hopper 220 and numeral 327 in Figure 4B indicates a frame for supporting tip parts of the arms 321.

When a discharge requesting signal S6 is output from the packaging device 400, the control device 330 stops drum Tₘ directly above a chute 410 of the packaging device 400. At the same time, drum T₁ stops at a position directly below the timing hopper 220. Thereafter, the control device 330 opens the slide gates 324 of these two drums T₁ and Tₘ and outputs a discharge end signal S7 to the packaging device 400 and a discharge requesting signal S2 to the weighing device 200.

As the discharge requesting signal S2 is received, the weighing device 200 opens the timing hopper 220 and transmits a discharge end signal S8 to the control device 330. Thereupon, the control device 330 controls the supplying device 310 to cause an appropriate amount of the flavouring S according to the weight of the food items m, typically a fixed percentage, to be discharged, closes the gates 324 and rotates the drums T₁-Tₘ.

Thus, each of the drums T₁-Tₘ is stopped whenever it comes to the position directly above the packaging device 400 and discharges the flavoured food items down to the packaging device 400. At the same time, the emptied drum receives a new batch of food items from the timing hopper 220 and a specified amount of the flavouring S is added from the supplying device 310. Thereafter, the control device 330 rotates the drums T₁-Tₘ such that the food items m and the flavouring S are stirred together.

Examples of the packaging device 400 include those adapted to open a bag and fill items in the opened bag and the so-called vertical pillow type adapted to form an elongated film into a tubular shape while filling it with items, to seal simultaneously the top of the filled bag and the bottom of a next bag to be filled and to cut the film in between. With such a vertical pillow type packaging device, bags which are not sealed or cut can be produced temporarily by changing its mode of operation. Thus, when the control unit has received an error signal S3 from the weighing device 200 or a discharge abnormality signal S5 from the device 300, a mode changing signal S9 may be output to the packaging device 400 to change the mode of its operation such that properly produced products and defective products can be easily distinguished from the ways they are packaged.

The aforementioned sorting device 500 is for the purpose of eliminating defective bags B from the production line described above in response to a signal S10 from the control unit 700. If it is disposed on the downstream side of the packaging device 400, as is the case according to the embodiment being described, it may appropriately comprise a sorting conveyor. If it is disposed between the device 300 and the packaging device 400, it may comprise a switching chute adapted to change the direction of discharge in response to a command signal. Thus, although an error may be committed in the flavouring process, defective products can be dependably prevented from being shipped.

The packing device 600 is for packing the completed bags B in cardboard boxes for shipment and also serves to count the number of bags B which have been handled. The counted number is transmitted to the control unit 700 to be used in production management.

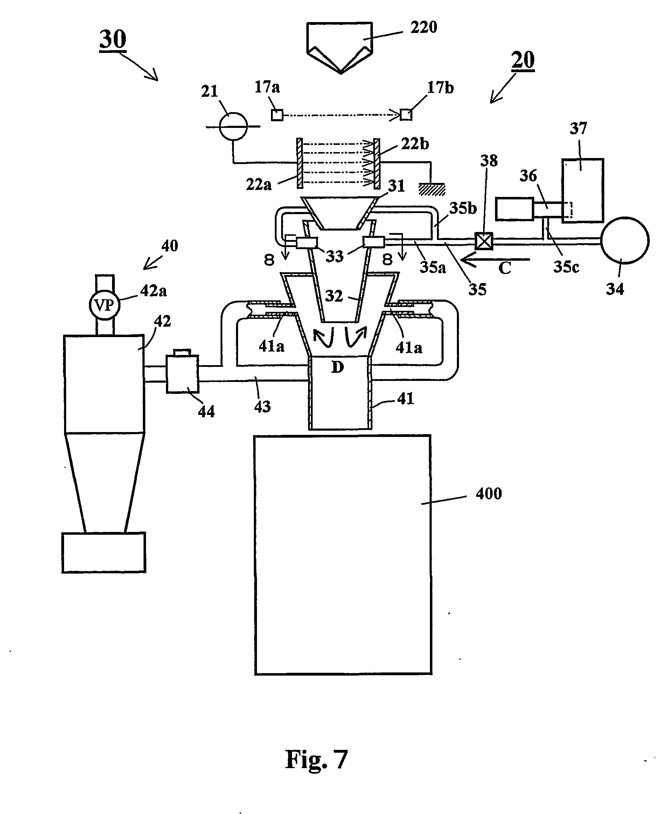

The control unit 700 is for controlling the devices 200, 300, 400, 500 and 600 in proper coordination and includes an input/output device 710 for communicating with these devices to control them individually and a memory 720 for storing production data on products for each kind, for example, as shown in Figure 6. The memory 720 stores data for each kind of product such as the kind of flavouring to be applied, the rate of its application, the speed of operation of the packaging device (say, in bpm = bags per minute), the weight of each bag to be produced and the planned number of bags to be produced. If the user operates on the input/output device 710 to input a product (code) number, various data on the corresponding kind of product are retrieved and transmitted to the individual ones of the corresponding devices. For example, the data on the kind and rate of application of the flavouring are transmitted to the device 300, the speed of operation is transmitted to the packaging device 400 and the weight of each bag is transmitted to the weighing device 200. The planned number of products is set in a microcomputer 730.

When the user operates a start key displayed on the input/output device 710, the control unit 700 starts to control the devices from the upstream side, recording the numbers of processed batches (or bags) individually by the devices 200, 300, 400, 500 and 600. From these data, the microcomputer 730 calculates the number of batches (or bags) yet to be processed. If this value becomes zero for any of these devices, a stop command is delivered to the corresponding device to stop its operations.

In the case of an error where defective products have been produced and eliminated, the deficiency caused thereby is added to the planned number of products for the devices on the upstream side such that a desired number of finished products will be produced. In this manner, a desired planned number of products can be obtained without producing a waste.

Since the flavouring device is adapted to flavour only one batch of food items at a time, it need not be as big as the conventional devices. Thus, a plurality of flavouring devices each for applying a different kind of flavouring may be provided such that differently flavoured food products can be produced easily by appropriately exchanging them.

Alternatively, a plurality of supplying devices 310 for different kinds of flavouring may be provided such that their outlets are all adjacent to the opening 325 of the mixing device 320 and the kind of flavouring can be selected. In such an application, each drum of the mixing device 320 may be selectively used for a respective flavouring. For example, one kind of flavouring may be added to even-numbered drums and another kind of flavouring may be added to odd-numbered drums. Since none of these drums is going to be used for different flavourings, there is no need to wash the mixing device 320.

It is also possible, in another application, to produce one bag at a time of differently seasoned food items in a sequential manner such that a series of differently flavoured packages can be produced, as could not be done by the prior art technology.

The invention has been described above by way of a system with one production line to carry out weighing, flavouring, packaging and packing but a distributing device such as disclosed in Japanese Patent Publication Tokko 4-35132 may be used if a plurality of such production lines are used on the upstream side of the transporting device 100 for each of the production lines such that food items can be distributed among the production lines uniformly. If each production line is associated with a specified kind of flavouring in such a system, products of different kinds can be produced simultaneously immediately before they are packaged and items which are left over can be returned and recycled to another production line.

The device 300 described above is convenient when flavourings of different types are used because a plurality of rotary drums are used. Figure 7 shows another kind of flavouring device 30 suited for flavourings in a powder form.

As shown in Figure 7, there is a charging device 20 directly below the timing hopper 220 for electrically charging the unseasoned food items as they are dropped from the timing hopper 220. This charging device 20 is composed of a grounded electrode 22b and another electrode 22a connected to a high-voltage source 21. As the dropped food items fall between these electrodes 22a and 22b, they are charged in a specified polarity. Such a charging device 20, however, may be dispensed with if the weighing device 200 and the timing hopper 220 are made of a dielectric material because the food items that are dropped are kept at the ground level.

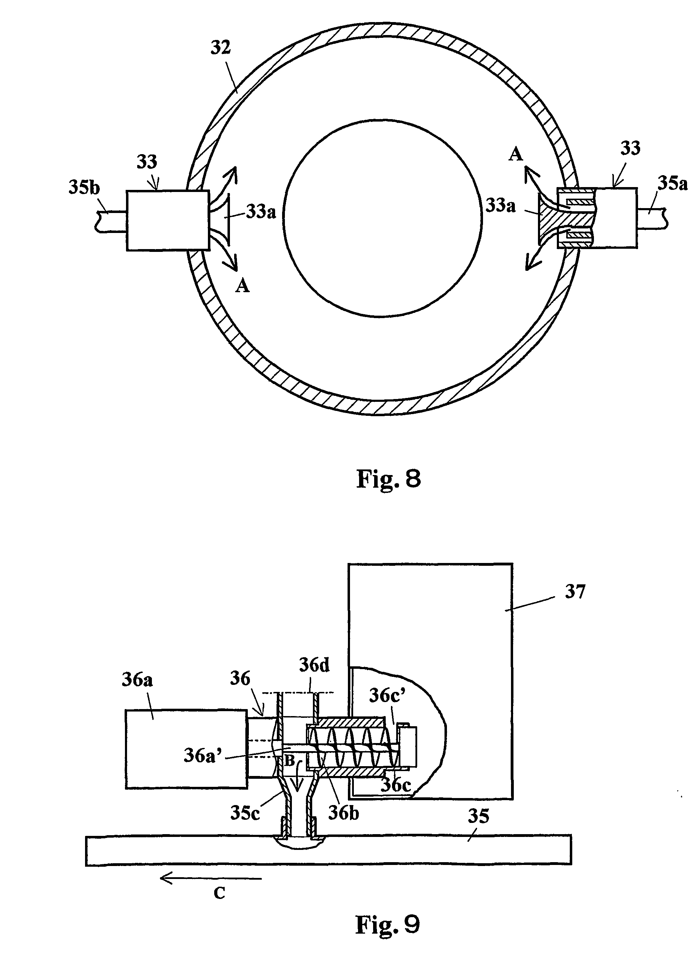

Below the charging device 20 are a receiving chute 31 and a flavouring chute 32 provided with a pair of electrostatic guns 33. These electrostatic guns 33 are for spraying the flavouring in powder form after charging it in a specified polarity, installed opposite each other on the wall surfaces of the chute 32. The tips of the nozzles of the guns 33 are connected through branch pipes 35a and 35b to a pipe 35 leading to a compressor 34. A screw-type supplying device or dispenser 36 is connected to another branch pipe 35c on the upstream side on the pipe 35 for supplying the flavouring from a storage tank 37. The nozzles at the tips of the electrostatic guns 33 are each provided with a trumpet-shaped deflector 33a, as shown in Figure 8, such that the flavouring in powder form will be dispersed as shown by arrows A.

As shown in Figure 9, the supplying device 36 is provided with a screw 36b attached to the main shaft 36a' of a driver motor 36a and a cylinder 36c which contains them. The cylinder 36c has a hole 36c' at its tip, opening to the interior of a tank 37 for the flavouring. As the driver motor 36a is switched on to rotate the screw 36b, the flavouring inside the tank 37 is taken into the cylinder 36c and discharged into the pipe 35, as indicated by arrow B. An air inlet 36d is provided on the other side of the screw 36b, being connected to the branch pipe 35c serving as a path for compressed air and led to the tips of the nozzles of the electrostatic guns 33, as indicated by arrow C. The pipe 35 also includes a switch valve 38 for adjusting the flow rate of the flavouring in the powder form containing air.

As shown in Figure 7, there is a collecting device 40 for the flavouring, having a discharge chute 41 which extends about the bottom portion of the chute 32 and leads to the packaging device 400. A pair of suction openings 41a is provided at an elevated portion of the discharge chute 41 for connecting to a cyclone 42 for removing excess flavouring through a pipe 43. The cyclone 42 is connected with a vacuum pump 42a for exhausting air. A switch valve 44 is provided in the pipe 43 for controlling the collection of the seasoning material in the powder form.

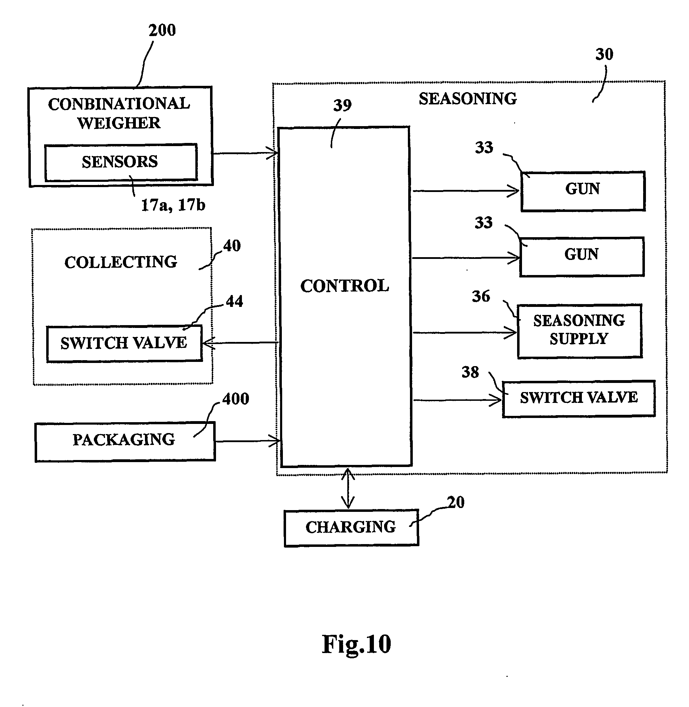

Next, the operation of the seasoning device 30 of Figure 7 will be explained. As a batch of unseasoned food items is discharged from the timing hopper 220, their passage is detected by sensors 17a and 17b. As their detection signals are received, the control device 39 (Figure 10) for the device 30 activates the electrostatic guns 33.

The food items which have passed through the charging device 20 are charged in a specified polarity and are dropped from the receiving chute 31 to the chute 32. At the same time, the flavouring in the powder form is taken out of the tank 37 through the supplying device 36 at a specified rate. As it is led into the pipe 35 through the branch pipe 35c, it is sprayed by compressed air into the chute 32 through the nozzles of the electrostatic guns 33. Since the flavouring and the food items are charged oppositely in polarity, the flavouring in powder form floating in the travel path of the food items is electrostatically attracted by the falling food items and becomes attached thereto. Thus, the floating flavouring is dependably and instantly attached to the food items.

The rate of supply of the flavouring can be adjusted by controlling the speed of rotation of the screw 36b through the control device 39. The time of air supply and the flow rate can be controlled by adjusting the switch valve 38. The rate of spray of the flavouring can thus be controlled at will. The deflectors 33a at the tips of the nozzles of the electrostatic guns 33 serve to have the flavouring sprayed in directions not perpendicular to the direction of fall of the food items. Thus, the flavouring being ejected does not inhibit the free fall of the food items and has no adverse effect on the high-speed flavouring process. The control unit 700 may be programmed to change the rate of spray according to the weight of the batch of food items being dropped.

Parts of the flavouring that were sprayed into the chute 32 but failed to attach to a food item are collected by the cyclone 42 through the discharge chute 41, as indicated by arrow D in Figure 7, as the switch 44 is opened. Thus, waste of the flavouring can be avoided. Moreover, this prevents defective sealing by the packaging device 400 disposed below the discharge chute 41 due to the presence of excess powder particles of the flavouring. The collected flavouring can be recycled and used again.

The examples described above are intended to be illustrative, not as limiting the scope of the invention. Many modifications and variations are possible within the scope of the invention. For example, more than two electrostatic guns may be used for more evenly attaching the flavouring onto the falling food items. Although sensors 17a and 17b were used for detecting the passage of food items being dropped, these sensors may be dispensed with by using the opening signal of the timing hopper 220 as a substitute. It also goes without saying that the packaging device to be used in a system embodying this invention need not be of a vertical pillow type. Any device adapted to fill a bag with the food items may be incorporated into a system of this invention.

## Claims

1. A flavouring system comprising:
a portioning device for receiving items and sequentially supplying batches of a specified quantity of said items; a flavouring dispenser for dispensing measured quantities of flavouring; an applying device downstream of the portioning device for individually applying said measured quantities of flavouring to said batches of items; a packaging device downstream of the applying device for packaging in a bag said batch of items; a sensor for monitoring discharge of flavouring by the applying device and/or dispenser; and a sorting device responsive to an output from the sensor indicating an abnormality in said discharge of said flavouring to discard a packaged product packaged by said packaging device.

2. A system according to claim 1, further comprising a control unit for operating said portioning device, said dispenser and said flavouring device in a mutually correlated manner.

3. A system of claim 2, wherein, said control unit is adapted to inhibit said applying device and/or said dispenser from applying said flavouring to said defective batch discharged from said portioning device in response to said portioning device discharging a defective batch which is not of said specified quantity of said items.

4. A system according to any of the preceding claims, wherein said applying device applies said flavouring according to a set ratio to each of said batches of said specified quantity.

5. A system according to any of the preceding claims, wherein said applying device and the dispenser are exchangeably attached to said flavouring system.

6. A system according to any of the preceding claims, wherein said applying device includes a charging device for electrically charging particles of said flavouring and an ejecting device for ejecting said electrically charged particles of said flavouring towards said items of said batch.

7. A system according to any of claims 1 to 5, wherein said applying device includes a mixing device for mixing together said flavouring and each of said batches of items.

8. A system of according to any of the preceding claims, wherein said portioning device comprises a weighing device which serves to supply said items to a plurality of weigh hoppers, to measure the individual weights of the items in said weigh hoppers, to select a.combination of said weigh hoppers with a specified weight on the basis of the measured weights and to thereby supply one of said batches.

9. A system according to any of the preceding claims, wherein said applying device is one of a plurality of applying devices receiving said items from a common supplying device, each of said plurality of applying devices applying a different flavouring.

10. A system according to at least claim 2, wherein the control unit is adapted to operate the packaging device in a mutually correlated manner with the other components of the system.

11. A system according to any of claims 1 to 10, wherein said packaging device is a vertical pillow packaging machine which serves to form an elongated film into a tubular form to produce a bag while filling said bag with said batch of items, to seal said film between said bag and another bag being subsequently formed, and to cut said film to separate said bag from said another bag.

12. A system according to any of the preceding claims, wherein the applying device is adapted to coat the items with flavouring.

## Patentansprüche

1. Aromatisiersystem mit:
einer Portioniervorrichtung zum Empfangen von Gegenständen und zum aufeinanderfolgendem Liefern von Chargen einer bestimmten Menge der Gegenstände;
einem Aromastoffspender zum Spenden von gemessenen Mengen an Aromastoffen;
einer Zuführvorrichtung stromabwärts von der Portioniervorrichtung für ein individuelles Zuführen der gemessenen Mengen an Aromastoff zu den Chargen der Gegenstände;
einer Verpackungsvorrichtung stromabwärts von der Zuführvorrichtung zum in einem Beutel erfolgenden Verpacken der Charge an Gegenständen;
einem Sensor zum Überwachen der Abgabe an Aromastoff durch die Zuführvorrichtung und / oder den Spender; und
einer Sortiervorrichtung, die auf ein Ausgabesignal von einem Sensor anspricht, der eine Anomalität bei der Abgabe des Aromastoffs anzeigt, um ein verpacktes Erzeugnis auszusondern, das durch die Verpackungsvorrichtung verpackt worden ist.

2. System gemäß Anspruch 1, das des weiteren eine Steuereinheit aufweist, die dem Betätigen der Portioniervorrichtung, dem Spender und der Aromatisiervorrichtung in einer zueinander in Wechselbeziehung stehenden Art und Weise dient.

3. System gemäß Anspruch 2, wobei
die Steuereinheit daran angepasst ist, das sie die Zuführvorrichtung und / oder den Spender daran hindert, den Aromastoff bei der fehlerhaften Charge anzuwenden, die von der Portioniervorrichtung abgegeben worden ist, im Ansprechen darauf, dass die Portioniervorrichtung eine fehlerhafte Charge ausgibt, die nicht von der bestimmten Menge der Gegenstände ist.

4. System gemäß einem der vorherigen Ansprüche, wobei
die Zuführvorrichtung den Aromastoff gemäß einem eingestellten Verhältnis zu jeder der Chargen der bestimmten Menge zuführt.

5. System gemäß einem der vorherigen Ansprüche, wobei
die Zuführvorrichtung und der Spender austauschbar an dem Aromatisiersystem angebracht sind.

6. System gemäß einem der vorherigen Ansprüche, wobei
die Zuführvorrichtung eine Aufladevorrichtung für ein elektrisches Aufladen der Partikel des Aromastoffs und eine Ausstoßvorrichtung hat zum Ausstoßen der elektrisch aufgeladenen Partikel des Aromastoffs zu den Gegenständen der Charge.

7. System gemäß einem der Ansprüche 1 bis 5, wobei
die Zuführvorrichtung eine Mischvorrichtung hat, die dem miteinander erfolgenden Vermischen des Aromastoffs und jeder der Chargen an Gegenständen dient.

8. System gemäß einem der vorherigen Ansprüche, wobei
die Portioniervorrichtung eine Wiegevorrichtung aufweist, die dazu dient, die Gegenstände zu einer Vielzahl an Wiegetrichtern zu liefern, die einzelnen Gewichte der Gegenstände in den Wiegetrichtern zu messen, eine Kombination der Wiegetrichter mit einem spezifischen Gewicht auf der Grundlage der gemessenen Gewichte auszuwählen und dadurch eine der Chargen zu liefern.

9. System gemäß einem der vorherigen Ansprüche, wobei
die Zuführvorrichtung eine von einer Vielzahl an Zuführvorrichtungen ist, die die Gegenstände von einer gemeinsamen Liefervorrichtung empfängt, wobei jede der Vielzahl an Zuführvorrichtungen einen anderen Aromastoff anwendet.

10. System gemäß zumindest Anspruch 2, wobei
die Steuereinheit daran angepasst ist, die Verpackungsvorrichtung in einer zueinander in Wechselbeziehung stehenden Art und Weise mit den anderen Bauteilen des Systems zu betreiben.

11. System gemäß einem der Ansprüche 1 bis 10, wobei
die Verpackungsvorrichtung eine Vertikalkissenverpackungsvorrichtung ist, die dazu dient, einen länglichen Film zu einer röhrenartigen Form auszubilden, um einen Beutel zu erzeugen, während der Beutel mit der Charge an Gegenständen gefüllt wird, um den Film zwischen dem Beutel und einem anderen Beutel, der anschließend ausgebildet wird, zu versiegeln, und den Film abzutrennen, um den Beutel von dem anderen Beutel zu trennen.

12. System gemäß einem der vorherigen Ansprüche, wobei die Zuführvorrichtung daran angepasst ist, die Gegenstände mit dem Aromastoff zu beschichten.

## Revendications

1. Système d'aromatisation; comprenant :
un dispositif de division (200) en portions servant à recevoir des produits et à fournir successivement des lots d'une quantité donnée desdits produits ; un distributeur (310) d'arôme servant à distribuer des quantités mesurées d'arôme ; un dispositif d'application (300) en aval du dispositif de division (200) en portions pour appliquer individuellement lesdites quantités mesurées d'arôme aux dits lots de produits ; un dispositif d'emballage (400) en aval du dispositif d'application (300) servant à emballer dans un sachet ledit lot de produits ; un capteur pour contrôler le refoulement d'arôme par le dispositif d'application (300) et/ou le distributeur (310) ; et un dispositif de tri (500) réagissant à un signal émis par le capteur, indiquant une anomalie dans ledit refoulement dudit arôme pour mettre au rebut un produit emballé par ledit dispositif d'emballage (400).

2. Système selon la revendication 1, comprenant en outre une unité de commande (700) servant à faire fonctionner d'une manière mutuellement corrélée ledit dispositif de division (200) en portions, ledit distributeur (310) et ledit dispositif d'aromatisation (300).

3. Système selon la revendication 2, dans lequel ladite unité de commande (700) est conçue pour empêcher ledit dispositif d'application (300) et/ou ledit distributeur (310) d'appliquer ledit arôme sur ledit lot défectueux déchargé dudit dispositif de division (200) en portions en réponse au déchargement, par ledit dispositif de division (200) en portions, d'un lot défectueux qui ne comporte pas ladite quantité donnée desdits produits.

4. Système selon l'une quelconque des revendications précédentes, dans lequel ledit dispositif d'application (300) applique ledit arôme dans une proportion préétablie que chacun desdits lots de ladite quantité donnée.

5. Système selon l'une quelconque des revendications précédentes, dans lequel ledit dispositif d'application (300) et le distributeur (310) sont fixés de manière remplaçable audit système d'aromatisation.

6. Système selon l'une quelconque des revendications précédentes, dans lequel ledit dispositif d'application (300) comporte un dispositif de charge (20) pour charger électriquement des particules dudit arôme et un dispositif d'expulsion (33) pour expulser vers lesdits produits dudit lot lesdites particules à charge électrique dudit arôme.

7. Système selon l'une quelconque des revendications 1 à 5, dans lequel ledit dispositif d'application (300) comporte un dispositif de malaxage (320) pour mélanger les uns avec les autres ledit arôme et chacun desdits lots de produits.

8. Système selon l'une quelconque des revendications précédentes, dans lequel ledit dispositif de division (200) en portions est constitué par un dispositif de pesage qui sert à fournir lesdits produits à une pluralité de trémies de pesage, à mesurer le poids individuel des produits présents dans lesdites trémies de pesage, à sélectionner une combinaison desdites trémies de pesage présentant un poids donné d'après les poids mesurés et à fournir de ce fait l'un desdits lots.

9. Système selon l'une quelconque des revendications précédentes, dans lequel ledit dispositif d'application (300) est l'un des dispositifs d'une pluralité de dispositifs d'application recevant lesdits produits d'un dispositif d'alimentation commun, chaque dispositif de ladite pluralité de dispositifs d'application appliquant un arôme différent.

10. Système selon au moins la revendication 2, dans lequel l'unité de commande (700) est conçue pour faire fonctionner le dispositif d'emballage (400) en corrélation avec les autres organes du système.

11. Système selon l'une quelconque des revendications 1 à 10, dans lequel ledit dispositif d'emballage (400) est une emballeuse de coussins verticaux qui sert à donner à un film allongé une forme tubulaire pour réaliser un sachet tout en remplissant ledit sachet avec ledit lot de produits, à fermer hermétiquement ledit film entre ledit sachet et un autre sachet à former à la suite, et à sectionner ledit film pour séparer ledit sachet dudit autre sachet.

12. Système selon l'une quelconque des revendications précédentes, dans lequel le dispositif d'application (300) est conçu pour napper d'arôme les produits.
